# EUROPÄISCHE PATENTSCHRIFT

(11) **EP 3 405 387 B1**
(45) Veröffentlichungstag und Bekanntmachung des Hinweises auf die Patenterteilung: **01.04.2020**
(21) Anmeldenummer: 17703708.2
(22) Anmeldetag: 01.02.2017
(51) Int. Cl.: H02K 99/00, H02K 7/14, H02K 55/00, H02K 11/00, H02K 11/01, B63G 7/00

(54) **DROHNE ZUR AUSLÖSUNG VON SEEMINEN**
DRONE FOR TRIGGERING UNDERWATER MINES
DRONE POUR LE DECLENCHEMENT DE MINES SOUS-MARINES

(30) Priorität: 01.03.2016 DE 102016203341
(43) Veröffentlichungstag der Anmeldung: 28.11.2018
(73) Patentinhaber: Siemens Aktiengesellschaft, 80333 München (DE)
(72) Erfinder: GRUNDMANN, Jörn, 91091 Grossenseebach (DE); WYCISK, Michael, 24248 Mönkeberg (DE)
(86) Internationale Anmeldenummer: PCT/EP2017/052154
(87) Internationale Veröffentlichungsnummer: WO 2017/148642

(56) Entgegenhaltungen:
- EP-A1- 0 125 180
- EP-A1- 0 289 692
- WO-A1-02/41474
- WO-A1-2004/054873
- BE-A1- 832 177
- DE-U1- 9 420 497
- JP-A- S5 876 395
- NL-A- 8 702 274
- NL-A- 8 802 840
- US-A1- 2004 042 150
- US-B1- 6 213 021

## Beschreibung

Die vorliegende Erfindung betrifft eine Drohne zur Auslösung von Seeminen mittels eines externen Magnetfeldes.

Bei bekannten Systemen zur Fernräumung von Seeminen (vgl. EP0125128A1, DE9420497U1, EP0289692A1 oder US6,213,021B1) werden unbemannte Drohnen eingesetzt, die zur Auslösung von Magnetminen mit magnetischen Spulen ausgestattet sind. Diese Spulen erzeugen starke Magnetfelder, die die Seeminen zur Detonation bringen können. Dabei sind die Drohnen so ausgeführt, dass sie durch die Detonation bei dem für die Auslösung typischen Abstand keinen Schaden nehmen.

Solche Drohnen können über ein eigenes Antriebssystem verfügen, beispielsweise verfügt die Deutsche Marine über fernsteuerbare Boote des Typs "Seehund", welche mit einem Dieselmotor ausgestattet sind. Die Magnetspule zur Auslösung der Minen ist hierbei in den Rumpf der fernsteuerbaren Boote integriert. Die Magnetspule selbst ist dabei aus einer Vielzahl von Windungen aus Kupferkabel gebildet.

Neben solchen an der Oberfläche schwimmenden Drohnen sind auch Unterwasserdrohnen zur Minenräumung bekannt, die entweder auch über einen eigenen Antrieb verfügen oder von anderen (Unter-)Wasserfahrzeugen gezogen werden können. Auch ist jedoch nach dem Stand der Technik die Magnetspule als von der Antriebsvorrichtung getrennte Einheit ausgebildet.

Nachteilig an den Minenräumdrohnen nach dem Stand der Technik ist, dass diese durch das große Gewicht der für die starken Magnetfelder benötigten Magnetspulen sehr schwer und meist auch relativ groß sind. So ist der Transport solcher Drohnen zu unterschiedlichen Einsatzorten relativ aufwendig, besonders ein Transport mit dem Flugzeug wird durch das hohe Gewicht erheblich erschwert. Bei Drohnen mit eigenem Antrieb trägt der Antriebsmotor zusätzlich zum hohen Gewicht und Volumen bei. Weiterhin ist für den Antrieb auch noch zusätzlich eine Energiezufuhr nötig, beispielsweise in Form von Treibstoff für einen Dieselmotor oder auch in Form von elektrisch gespeicherter Energie für einen Elektromotor.

Aufgabe der Erfindung ist es daher, eine Drohne zur Auslösung von Seeminen mittels eines externen Magnetfeldes anzugeben, welche die genannten Nachteile überwindet. Insbesondere soll eine Drohne zur Verfügung gestellt werden, welche vergleichsweise klein und leicht ausgebildet werden kann und trotzdem über einen eigenen Antrieb sowie ein magnetisches Auslösesystem verfügt.

Diese Aufgabe wird durch die in Anspruch 1 beschriebene Drohne gelöst. Die erfindungsgemäße Drohne ist zur Auslösung von Seeminen mittels eines Magnetfeldes geeignet. Sie weist einen Antrieb mit einem Elektromotor zur Fortbewegung im Wasser auf, wobei der Elektromotor einen Stator und einen auf einer Rotorwelle drehbar gelagerten Rotor umfasst. Der Stator weist wenigstens eine Statorwicklung auf, welche auf einem ersten Träger angeordnet ist. Der Rotor weist einen zweiten Träger und darauf angeordnet wenigstens ein magnetisches oder elektromagnetisches Element auf, welches elektromagnetisch derart mit der wenigstens einen Statorwicklung zusammenwirken kann, dass beim Betrieb des Elektromotors ein übergeordnetes Magnetfeld ausgebildet wird. Der Elektromotor ist so ausgestaltet, dass bei seinem Betrieb das außerhalb des Elektromotors ausgebildete externe Magnetfeld dort zumindest in einem Teilbereich dieser externen Umgebung eine magnetische Flussdichte von wenigstens 0.5 mT erreicht.

Mit anderen Worten ist der Elektromotor so ausgestaltet, dass er unabhängig von dem genauen Motortyp und seiner speziellen Konstruktionsart durch das Zusammenwirken von Rotor und Stator ein für seinen Betrieb notwendiges elektromagnetisches Feld ausbilden kann. Der Elektromotor ist weiterhin so ausgelegt, dass bei seinem Betrieb ein magnetischer Fluss von wenigstens dem genannten Schwellwert in einen Bereich außerhalb des Elektromotors vordringen werden kann. Hierzu ist der Elektromotor als Ganzes und insbesondere der Träger der Statorwicklungen so ausgebildet, dass ein Vordringen eines derart hohen Teils des magnetischen Flusses in diese außenliegenden Bereiche außerhalb des Elektromotors nicht verhindert wird.

Unter der Anordnung der wenigstens einen Statorwicklung "auf einem ersten Träger" soll im vorliegenden Zusammenhang allgemein verstanden werden, dass diese Wicklung in irgendeiner Art von diesem ersten Träger gehalten werden. Dabei ist unerheblich, ob die Wicklung(en) auf einer Oberfläche des Trägers angebracht sind oder ob der erste Träger die Wicklungen zumindest teilweise räumlich umschließt. Die Wicklung(en) können prinzipiell radial innenliegend oder außenliegend auf dem Träger angebracht sein oder auch in diesen eingebettet sein. Unter dem externen Magnetfeld soll hier allgemein ein Magnetfeld an einem Ort außerhalb des Elektromotors verstanden werden.

Ein wesentlicher Vorteil der erfindungsgemäßen Drohne liegt darin, dass das beim Betrieb des Elektromotors für den Antrieb genutzte Magnetfeld zusätzlich zur Auslösung der Seeminen genutzt werden kann. Bei herkömmlichen Elektromotoren wird das Vordringen von magnetischem Fluss in außenliegende Bereiche typischerweise verhindert, unter anderem um übliche Vorgaben zur elektromagnetischen Verträglichkeit einzuhalten. Hierzu werden magnetisch flussführende Materialien eingesetzt, die den magnetischen Fluss um die innenliegenden Komponenten des Motors herum ringförmig schließen und ein Vordringen des Flusses in außerhalb des Rotors liegende Bereiche vermeiden.

Beim Betrieb von Minenräumdrohnen in minenbelasteten Gewässern sind die genannten Vorgaben zur elektromagnetischen Verträglichkeit allgemein unerheblich, und auf die übliche Abschirmung des magnetischen Flusses kann verzichtet werden. So kann erreicht werden, dass der Elektromotor eine Doppelfunktion erfüllt, indem er nicht nur für den Antrieb, sondern auch für die Minenauslösung genutzt wird. Es werden das Gewicht und der Platz für eine zusätzliche Magnetspule eingespart, und die Drohne kann im Vergleich zum Stand der Technik besonders leicht und klein ausgeführt werden. Sie ist dadurch vorteilhaft auch gut transportabel sowie energiesparend zu betreiben.

Vorteilhafte Ausgestaltungen und Weiterbildungen der Erfindung gehen aus den von den Ansprüchen 1 abhängigen Ansprüchen sowie der folgenden Beschreibung hervor.

So kann der Elektromotor vorteilhaft so ausgebildet sein, dass der Rotor radial innerhalb des Stators angeordnet ist. Mit anderen Worten kann es sich um eine sogenannte Innenrotor- oder Innenläufermaschine handeln. Bei einem derartigen Motor können dann die magnetischen Eigenschaften des Trägers der wenigstens einen Statorwicklung so ausgebildet sein, dass beim Betrieb des Elektromotors ein magnetischer Fluss von wenigstens 0.5 mT in einen Bereich außerhalb des Elektromotors vordringen kann.

Bei einer außenliegenden Anordnung des Stators kann der Träger der Statorwicklung(en) den Rotor typischerweise radial vollständig umgeben. Es kann beispielsweise ein zylindrischer Träger mit kreisförmigem Innenprofil sein, auf dessen Innenseite die Statorwicklung(en) eingebettet sind. Bei einer solchen außenliegenden Anordnung des ersten Trägers ist es wesentlich, dass die magnetischen Eigenschaften dieses Trägers so ausgebildet sind, dass ein ausreichend starkes Vordringen des Magnetfeldes nach außen nicht verhindert wird. Bei geeigneter Wahl der magnetischen Eigenschaften der übrigen Komponenten, beispielsweise einer Außenwand der Drohne, kann auf diese Weise besonders vorteilhaft sogar ein Magnetfeld über dem genannten Schwellwert außerhalb der gesamten Drohne erzeugt werden.

Bei einem herkömmlichen Innenläufermotor ist der Träger der Statorwicklungen typischerweise als Stator-Eisenjoch ausgebildet, welches den magnetischen Fluss um den innenliegenden Rotor herum ringförmig schließt und ein Vordringen des magnetischen Flusses in außenliegende Bereiche wirksam verhindert. Auf ein solches Stator-Eisenjoch soll im Zusammenhang mit der vorliegenden Erfindung aber gerade verzichtet werden, um ein Vordringen des magnetischen Flusses nach außen zu ermöglichen. Der den Rotor umschließende erste Träger sollte hier also so ausgeführt sein, dass der magnetische Fluss nicht ringförmig über die Struktur des ersten Trägers hinweg geschlossen wird. Bei einer kreiszylindrisch den Rotor umschließenden Konfiguration des ersten Trägers sollte dieser also nicht in azimutaler Richtung geschlossen flussführend sein. Er kann hierzu beispielsweise vollständig amagnetisch sein. Oder aber er kann weichmagnetische Segmente aufweisen, welche nur zur Führung von magnetischem Fluss in radial außenliegende Bereiche ausgebildet sind, nicht aber zur Ausbildung eines geschlossenen magnetischen Flusses in Umlaufrichtung des Rotors. Es können sich also weichmagnetische azimutale Trägersegmente mit amagnetischen Trägersegmenten abwechseln, um eine gewünschte Flussführung des übergeordneten Magnetfeldes zu ermöglichen und das Magnetfeld insbesondere auch in radialer Richtung nach außen zu führen, ohne den Fluss in Umlaufrichtung zu schließen.

Hierzu kann der Träger der Statorwicklung(en) vorteilhaft wenigstens abschnittsweise aus einem Material ausgebildet sein, welches eine effektive Permeabilitätszahl µᵣ - auch relative Permeabilität genannt - von höchstens 300 aufweist. Besonders vorteilhaft liegt die effektive Permeabilitätszahl µᵣ nur bei höchstens 10 oder sogar nur bei höchstens 5. Durch die Wahl eines derart amagnetischen Materials kann erreicht werden, dass der magnetische Fluss den außenliegenden ersten Träger ausreichend durchdringen kann.

Beispielsweise kann der erste Träger wenigstens abschnittsweise aus einem Material ausgebildet sein, welches einen amagnetischen Stahl und/oder Kunststoff umfasst. Ein solches kunststoffhaltiges Material kann beispielsweise vorteilhaft ein Harz, ein Thermoplast, ein Duroplast und/oder ein glasfaserverstärkter Kunststoff sein.
Alternativ zu den vorab beschriebenen Ausführungsformen mit innenliegendem Rotor kann der Elektromotor auch so ausgebildet sein, dass der Stator innerhalb des Rotors angeordnet ist. Es kann sich also um eine sogenannte Außenläufermaschine handeln. Mit einem solchen Elektromotor kann auf besonders einfache Weise ein hohes externes Magnetfeld erzeugt werden, wenn der Rotor wenigstens ein Element zur Erzeugung eines Magnetfelds aufweist und radial außerhalb des Rotors kein ringförmig geschlossenes weichmagnetisches Element angeordnet ist.

Bei einer Außenläufermaschine umgibt der Träger des Rotors, also der zweite Träger, den Träger der Statorwicklungen, also den ersten Träger, radial. Bei einer derartigen Ausführungsform ist dann vorteilhaft vor allem der zweite Träger so ausgestaltet, dass beim Betrieb des Elektromotors ein magnetischer Fluss von wenigstens 0.5 mT in einen Bereich außerhalb des Elektromotors vordringen kann. Um dies zu erreichen, kann bei einer solchen Ausführungsform vorteilhaft der dann außenliegende zweite Träger analog zu den beschriebenen vorteilhaften Ausführungsformen des außenliegenden ersten Träger in einer Innenläufermaschine ausgebildet sein. Insbesondere kann dann also der zweite Träger zumindest abschnittsweise aus einem entsprechenden schwach magnetischen Material ausgebildet sein. Auch die übrigen vorteilhaften Ausführungsformen für den Träger gelten jeweils insbesondere für den bei der jeweiligen Maschinengeometrie (Innenläufer oder Außenläufer) radial weiter außenliegenden der beiden Träger.

Allgemein können also jeweils die magnetischen Eigenschaften des radial weiter außenliegenden der beiden Träger so ausgestaltet sein, dass beim Betrieb des Elektromotors ein magnetischer Fluss von wenigstens 0.5 mT in einen Bereich außerhalb des Elektromotors vordringen kann.

Der Elektromotor kann allgemein weiterhin ein Gehäuse aufweisen, welches ebenfalls amagnetisch ausgebildet ist. So kann erreicht werden, dass der magnetische Fluss auch ein solches Motorgehäuse durchdringt, und dass ein ausreichend hohes externes Magnetfeld zum Auslösen einer Magnetmine erzeugt werden kann.

Durch die vorgeschlagene Ausgestaltung des ersten Trägers im Stator beziehungsweise des zweiten Trägers im Rotor mit nicht ringförmig geschlossenem Magnetfluss wird die magnetische Kopplung zwischen Stator und Rotor im Vergleich zu herkömmlichen Motoren deutlich reduziert. Dies kann ohne zusätzliche Anpassung zu einer geringeren Leistung des Elektromotors führen. Um dies zu kompensieren, können zusätzliche Maßnahmen ergriffen werden, wie zum Teil weiter unten genauer beschrieben wird. So können supraleitende Elemente im Stator und/oder im Rotor zum Einsatz kommen, um bei vergleichbarer oder sogar kleinerer Baugröße stärkere Magnetfelder zu erzeugen. Es können aber auch bei normalleitenden Komponenten Maßnahmen ergriffen werden, um die niedrigere Kopplung zu kompensieren. So kann der Motor beispielsweise in axialer Richtung länger ausgeführt werden, als es bei einem vergleichbaren Motor mit Stator-Eisenjoch der Fall wäre. Alternativ kann die Windungszahl erhöht werden und/oder es können im Falle permanentmagnetischer Erregung stärkere Permanentmagnete verwendet werden.

Allgemein und unabhängig von der genauen Anordnung von Rotor und Stator kann der Elektromotor als Synchronmotor ausgebildet sein. Dabei kann der Rotor wenigstens ein Element zur Erzeugung eines Magnetfeldes aufweisen. Insbesondere kann es sich dabei um wenigstens einen Permanentmagneten und/oder um wenigstens eine elektrische Erregerspule handeln. Ein solcher permanenterregter Elektromotor ist besonders gut geeignet, um ein vergleichsweise hohes übergeordnetes Magnetfeld auszubilden.

Alternativ kann der Elektromotor aber auch als Asynchronmotor ausgebildet sein. Hierbei kann der Rotor als elektromagnetisches Element wenigstens ein Element zur Ausbildung eines geschlossenen Strompfads aufweisen. Hierbei kann es sich insbesondere um einen Kurzschlusskäfig und/oder um wenigstens eine ringförmig kurzgeschlossene oder kurzschließbare Rotorspule handeln. Eine kurzschließbare, jedoch nicht dauerhaft kurzgeschlossene Rotorspule kann beispielsweise bei einem sogenannten Schleifringrotor vorliegen. Auch mit einem solchen Asynchronmotor können durch das elektromagnetische Zusammenwirken von Rotor und Stator ausreichen hohe externe Magnetfelder zum Auslösen von Magnetminen erzeugt werden.

Allgemein und unabhängig von der jeweiligen Konfiguration des Elektromotors können der Rotor und die Komponenten des Stators - insbesondere die Statorwicklung(en) und der erste Träger - so ausgebildet sein, dass im Betrieb des Elektromotors das durch das übergeordnete Magnetfeld außerhalb des Elektromotors gebildete externe Magnetfeld dort zumindest in einem Teilbereich eine magnetische Flussdichte von wenigstens 5 mT, insbesondere wenigstens 50 mT oder sogar wenigstens 500 mT aufweist. Mit derart hohen magnetischen Flussdichten kann auch aus relativ großer Entfernung eine Magnetmine detoniert werden. Insbesondere können auch außerhalb der Drohne derart hohe magnetische Flussdichten realisiert werden. Hierzu kann auch eine Außenwand der Drohne aus amagnetischem Material gebildet sein. Unter einem amagnetischen Material soll im Zusammenhang mit der vorliegenden Erfindung allgemein ein Material mit einer relativen Permeabilität µᵣ von höchstens 300 verstanden werden.

Der Elektromotor kann vorteilhaft wenigstens ein supraleitendes Element umfassen. Mit solchen supraleitenden Materialien können mit relativ kleinen und leichten Komponenten vergleichsweise hohe Magnetfelder erzeugt werden, was zu dem Ziel, eine kleine und leichte Drohne zur Verfügung zu stellen, in besonders vorteilhafter Weise beiträgt. Prinzipiell können die elektrischen Komponenten des Rotors und des Stators aber auch ausschließlich normalleitende Komponenten aufweisen, und die Grundidee der vorliegenden Erfindung kann trotzdem verwirklicht werden.

Vorteilhaft kann der Rotor des Elektromotors insbesondere wenigstens einen Block aus supraleitendem Material umfassen, in welchem ein magnetischer Fluss derart aufgeprägt werden kann, dass der wenigstens eine Block wie ein Permanentmagnet wirkt. Insbesondere kann es sich bei einem solchen Block um einen Block aus Bulk-Supraleitermaterial handeln. Es können besonders vorteilhaft auch mehrere solcher Blöcke vorliegen, um ein besonders hohes, konstantes Magnetfeld zu erzeugen.

Zum Aufprägen eines permanenten magnetischen Flusses in Supraleitern stehen verschiedene Verfahren zur Verfügung, die im Stand der Technik bekannt sind. So kann beispielsweise bei einer Temperatur oberhalb der Sprungtemperatur am Ort des Supraleiters mit einer externen Magnetspule oder auch einem Permanentmagneten ein magnetischer Fluss aufgeprägt werden, der dann durch Abkühlung auf eine Temperatur unterhalb der Sprungtemperatur des Supraleiters im supraleitenden Material eingefroren wird. Solche Verfahren sind im Stand der Technik unter den englischen Begriffen "Field Cooling" und "Zero Field Cooling" bekannt. Eine alternative Methode ist die Methode der Flusspumpe. Hierbei wird bei einer kyrogenen Temperatur unterhalb der Sprungtemperatur über Magnetfeldpulse eine Magnetisierung im supraleitenden Material aufgeprägt. All diesen Methoden ist gemeinsam, dass nach Entfernen des externen Magneten, der zur Aufmagnetisierung verwendet wird, der magnetische Fluss im Supraleiter erhalten wird und dieser als Permanentmagnet wirkt, solange er auf einer Temperatur unterhalb seiner Sprungtemperatur gehalten wird.

Alternativ zu der Ausführungsform mit massiven Blöcken aus durchgehend supraleitendem Material können solche Blöcke auch jeweils aus einer Mehrzahl supraleitender Bandleiter zusammengesetzt sein. Insbesondere kann ein solcher Block als Stapel von solchen Bandleitern gebildet sein. Auch hier kann dann in dem jeweiligen Block ein magnetischer Fluss derart eingeprägt werden, dass der Block wie ein Permanentmagnet wirkt, wie oben beschrieben.

Allgemein weisen alle Ausführungsformen, bei denen ein magnetischer Fluss permanent auf ein supraleitendes Material des Rotors aufgeprägt wird, den Vorteil auf, dass zur Aufrechterhaltung des Rotormagnetfeldes keine Energie benötigt wird. Dementsprechend werden auch keine Stromzuführungen von der wärmen äußeren Umgebung zur kryogenen Umgebung des Supraleitermaterials benötigt, und die thermischen Verluste bei der Kühlung des Supraleiters auf eine Temperatur unterhalb seiner Sprungtemperatur können vorteilhaft gering gehalten werden. Da solche supraleitenden Komponenten nicht nur leicht aufmagnetisiert, sondern auch leicht entmagnetisiert werden können - beispielsweise durch Erwärmung - können sie auch leicht transportiert werden. Beispielsweise können dann Vorgaben zur elektromagnetischen Verträglichkeit leicht eingehalten werden, wenn die supraleitenden Komponenten der Drohne nicht magnetisiert sind, solange diese nicht im Einsatz ist.

Alternativ oder zusätzlich zu dem als Permanentmagnet wirkenden Supraleiter kann der Rotor wenigstens eine supraleitende Erregerspule aufweisen. Eine solche Erregerwicklung des Rotors kann beispielsweise über eine Gleichstromquelle mit elektrischer Energie versorgt werden. Aufgrund der vernachlässigbaren elektrischen Verluste einer solchen supraleitenden Erregerwicklung ist es aber grundsätzlich auch möglich, diese Wicklung im Quasi-Dauerkurzschlussstrommodus (englisch: "quasi persistent current mode") zu betreiben. Dies ist vor allem bei solchen Ausführungsformen interessant, bei denen das Magnetfeld im kurzgeschlossenen Betriebsmodus mit weniger als 1% pro Stunde abfällt. Dann kann die Erregerwicklung einer solchen Drohne vor ihrem Einsatz mit einer externen Stromquelle aufgeladen werden, und die Erregerwicklung der Drohne kann während ihres Einsatzes von beispielsweise einigen Stunden ohne eine Stromquelle für die Erregerwicklung(en) betrieben werden. Bei einer solchen Ausführungsform kann auch auf elektrische Anschlüsse der Erregerwicklung verzichtet werden, wodurch die thermischen Verluste in der tiefkalten Umgebung der supraleitenden Wicklung(en) reduziert werden können.
Grundsätzlich können mit supraleitenden Rotor-Erregerspulen bei ähnlicher Größe und Bauform deutlich stärkere Rotormagnetfelder realisiert werden als mit herkömmlichen normalleitenden Erregerspulen. Oder anders ausgedrückt, kann der Elektromotor bei ähnlicher Leistung und ähnlichem magnetischem Fluss kleiner und leichter ausgeführt werden als mit normalleitenden Wicklungen, beispielsweise herkömmlichen Kupferwicklungen. Der Energiebedarf ist durch die niedrigen Verluste ebenfalls niedriger als mit herkömmlichen Leitern, so dass selbst bei einem dauerhaft gespeisten Betrieb weniger elektrische Leistung benötigt wird, und ein Energiespeicher der Drohne dementsprechend auf einen geringeren Energieverbrauch ausgelegt werden kann.

Alternativ oder zusätzlich zu den beschriebenen supraleitenden Komponenten im Rotor kann der Elektromotor auch so ausgestaltet sein, dass seine Statorwicklung einen supraleitenden elektrischen Leiter umfasst. Auch hier können bei gleichem Bauvolumen im Vergleich zu herkömmlichen Kupferwicklungen deutlich höhere Statorströme und/oder deutlich höhere Windungszahlen realisiert werden. Alternativ oder zusätzlich kann auch das Bauvolumen und damit auch das Gewicht der Drohne im Vergleich zu einem Motor mit normalleitenden Materialien reduziert werden. Mit derartigen supraleitenden Statorwicklungen kann ein hohes externes Magnetfeld außerhalb des Elektromotors realisiert werden.

Allgemein und unabhängig davon, ob das supraleitende Material im Rotor und/oder im Stator zum Einsatz kommt, kann dieses Material als hochtemperatursupraleitendes Material ausgestaltet sein. Hochtemperatursupraleiter (HTS) sind supraleitende Materialien mit einer Sprungtemperatur oberhalb von 25 K und bei einigen Materialklassen, beispielsweise den Cuprat-Supraleitern, oberhalb von 77 K, bei denen die Betriebstemperatur durch Kühlung mit anderen kryogenen Materialien als flüssigem Helium erreicht werden kann. HTS-Materialien sind auch deshalb besonders attraktiv, da diese Materialien abhängig von der Wahl der Betriebstemperatur hohe obere kritische Magnetfelder sowie hohe kritische Stromdichten aufweisen können. Mit ihnen können daher besonders leicht hohe Magnetfelder erzeugt werden.

Besonders vorteilhaft kann ein solches hochtemperatursupraleitendes Material Magnesiumdiborid und/oder ein Material des Typs REBa₂Cu₃Oₓ, umfassen, wobei RE für ein Element der seltenen Erden oder eine Mischung solcher Elemente steht. Bei supraleitenden Wicklungen im Rotor und/oder im Stator kann der supraleitende Leiter vorteilhaft als Bandleiter ausgeführt sein.

Die Drohne kann vorteilhaft einen Energiespeicher zur Speicherung von elektrischer oder chemischer Energie für den Betrieb des Elektromotors aufweisen. Insbesondere kann die Drohne eine elektrische Batterie aufweisen und/oder sie kann einen Treibstofftank für einen elektrischen Generator aufweisen. Alternativ kann die Drohne jedoch prinzipiell auch während des Einsatzes kabelgebunden von einer Steuerungsanlage, beispielsweise einem größeren Schiff aus, mit Energie versorgt werden.

Die Drohne kann vorteilhaft so ausgestaltet sein, dass der Elektromotor das alleinige magnetische Auslösesystem zur Auslösung von Seeminen bildet. Es sind dann also insbesondere keine weiteren Magnetspulen oder Permanentmagnete zur Erzeugung eines externen Magnetfeldes oberhalb der Auslöseschwelle von Seeminen vorhanden. Bei einer solchen Ausführungsform kann allerdings ohne weiteres noch ein zusätzliches akustisches Auslösesystem zum Auslösen von Geräuschminen vorhanden sein. Prinzipiell ist es auch denkbar, dass noch ein weiteres magnetisches Auslösesystem vorliegt, beispielsweise wenn ein vom Magnetfeld des Elektromotors abweichender magnetischer Flussverlauf erzeugt werden soll oder wenn ein zeitlich veränderlicher Magnetfluss erzeugt werden soll.

Besonders vorteilhaft kann der Elektromotor eine Polpaarzahl zwischen 1 und 5 aufweisen. Bei einer solchen vergleichsweise niedrigen Polpaarzahl kann relativ leicht ein Magnetfluss mit einer relativ hohen radialen Reichweite nach außen erzeugt werden. Somit kann leicht ein relativ hohes externes Magnetfeld zum Auslösen der Minen zur Verfügung gestellt werden.

Die Drohne kann vorteilhaft dazu ausgestaltet sein, unter Wasser bewegt zu werden. Alternativ dazu kann sie grundsätzlich aber auch als eine an einer Wasseroberfläche schwimmende Drohne ausgestaltet sein.

Nachfolgend wird die Erfindung anhand einiger bevorzugter Ausführungsbeispiele unter Bezugnahme auf die angehängten Zeichnungen beschrieben, in denen:
Figur 1 eine Drohne 1 im schematischen Längsschnitt zeigt und
Figuren 2 bis 5 beispielhafte Motoren 3 im schematischen Querschnitt zeigen.

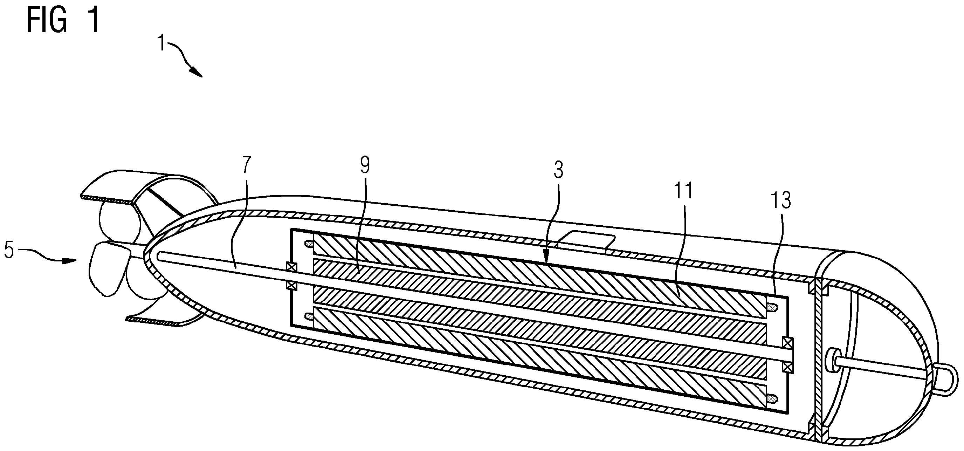

In Figur 1 ist eine Drohne 1 nach einem ersten Ausführungsbeispiel der Erfindung im schematischen Längsschnitt gezeigt. Gezeigt ist eine länglich geformte Drohne, die zur Fortbewegung unter Wasser ausgelegt ist. Sie weist in ihrem hinteren (in der Zeichnung links dargestellten) Teil eine Antriebsschraube auf. Die Drohne ist also mit einem eigenständigen Antriebssystem ausgestattet, wobei die Antriebsschraube hier über eine Rotorwelle 7 eines Elektromotors 3 angetrieben wird. Der Elektromotor 3 nimmt bei diesem Ausführungsbeispiel einen großen Teil des verfügbaren Innenraums der Drohne ein. Der vom Elektromotor 3 beanspruchte Platz kann jedoch prinzipiell auch kleiner ausfallen, beispielsweise um Platz für eine Steuereinheit zur Ansteuerung des Motors und übriger, hier nicht gezeigter Lenkeinheiten für die Drohne zur Verfügung zu stellen. Weiterhin kann auch ein hier ebenfalls nicht gezeigter Energiespeicher in Form einer Batterie im Inneren der Drohne vorhanden sein. Alternativ kann ein Treibstofftank, beispielsweise ein Dieseltank, und ein Generator zur Versorgung des Motors mit elektrischer Energie vorgesehen sein. Oder aber, der Elektromotor 3 kann über ein hier nicht gezeigtes Elektrokabel mit Energie versorgt werden.

Der Elektromotor 3 weist einen Rotor 9 auf, der auf der Rotorachse 7 angeordnet ist und so drehmomentschlüssig mit dieser gekoppelt ist, dass über die Rotorachse 7 die Antriebsschraube 5 angetrieben werden kann. Der Elektromotor 3 weist weiterhin einen Stator 11 auf, der radial außerhalb des Rotors 9 angeordnet ist. Es handelt sich hier also um einen Innenrotormotor. Der Stator ist hier mit einer Mehrzahl von Statorwicklungen versehen, deren Wickelköpfe in den axialen Endbereichen des Stators 11 als kleine Schlaufen schematisch dargestellt sind.

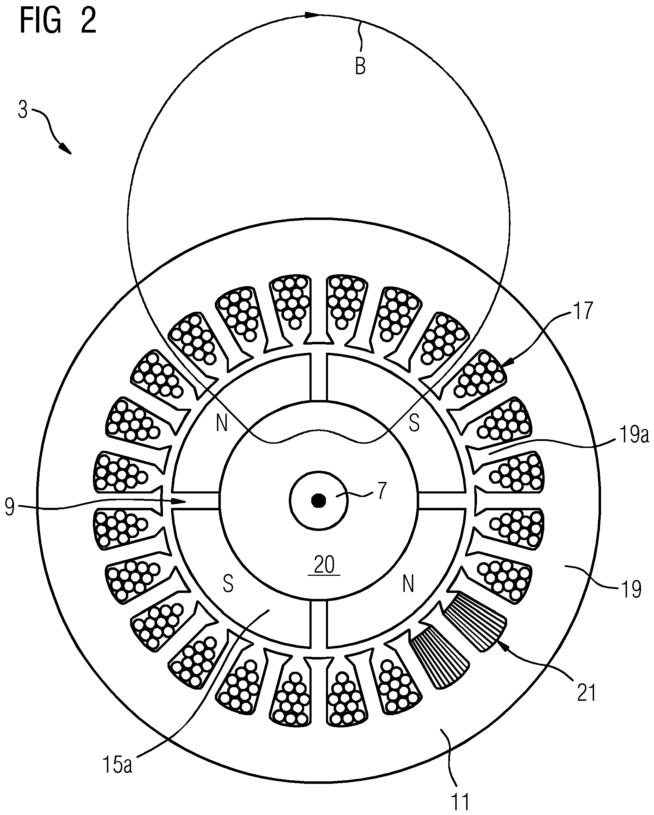

Figur 2 zeigt einen schematischen Querschnitt eines solchen beispielhaften Elektromotors 3. In dieser Querschnittsansicht ist zu erkennen, dass der Stator 11 eine Vielzahl von Statorwicklungen 17 umfasst, die von einem ersten Träger 19 des Stators 11 gehalten werden. Diese Statorwicklungen sind auf der radial innenliegenden Seite dieses kreiszylindrischen ersten Trägers 19 zwischen dort vorhandene Zähne 19a eingebettet.

Der Rotor 9 weist im gezeigten Beispiel eine vierpolige Anordnung von Permanentmagneten 15a auf, die symmetrisch um die Rotorwelle 7 herum angeordnet sind. Die Permanentmagnete 15a sind dabei so ausgestaltet, dass sich an radial außen liegenden Oberfläche abwechseln zwei Nordpole N und zwei Südpole S befinden. Bei einem Betrieb des Elektromotors 3 dreht sich der Rotor 9 innerhalb des Stators 11, und durch die elektromagnetische Wechselwirkung zwischen den Permanentmagneten 15a und den Statorwicklungen 17 entsteht ein zeitlich veränderliches übergeordnetes Magnetfeld B sowie das Drehmoment für den Antrieb.

Der erste Träger 19 ist bei diesem Ausführungsbeispiel vollständig aus einem amagnetischen Material, beispielsweise einem amagnetischen Stahl ausgebildet. Hierdurch kann der gebildete magnetische Fluss radial weit nach außen vordringen, über die Struktur des Stators 11 und des ersten Trägers 19 hinaus, wie durch die beispielhaft für das Magnetfeld B gezeichnete Feldlinie angedeutet ist. Der Elektromotor 3 ist insgesamt so ausgelegt, dass auch außerhalb des in Figur 2 nicht dargestellten Motorgehäuses 13 ein externes Magnetfeld mit einem magnetischen Fluss oberhalb zumindest eines der vorab genannten Schwellwerte einstellen kann. Damit können auch außerhalb der gesamten Drohne Magnetfelder B erzeugt werden, die zur Auslösung von Magnetminen ausreichend sind.

Die Statorwicklungen 17 können als herkömmliche normalleitende Wicklungen ausgebildet sein, beispielsweise aus Kupfer. Sie können alternativ aber auch aus supraleitenden Leitern 21 gebildet sein, wie in Fig. 2 beispielhaft für eine der Statorwicklungen angedeutet ist.

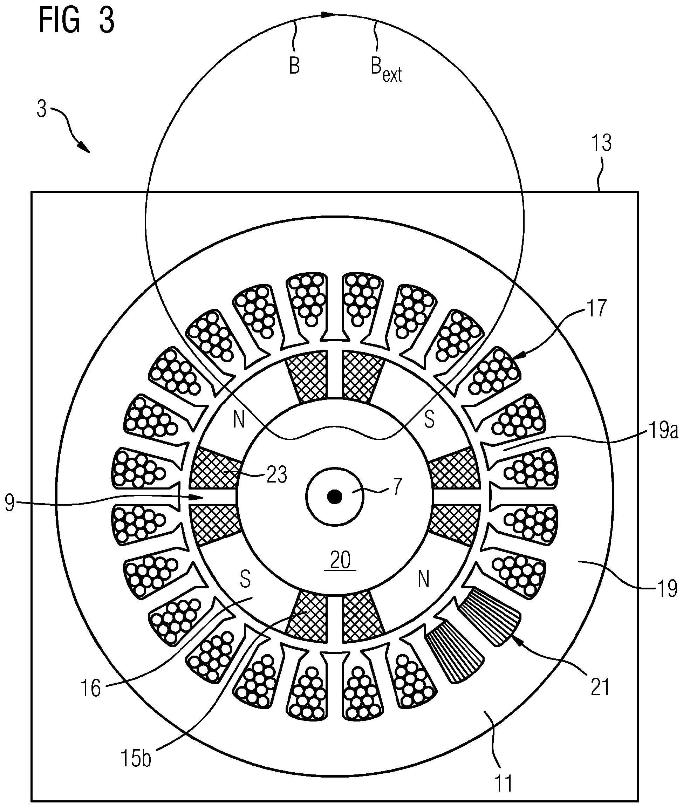

Eine weitere beispielhafte Ausführungsform des Elektromotors 3 ist in Figur 3 gezeigt. Dieser Elektromotor 3 ist hier ebenfalls im schematischen Querschnitt gezeigt, in diesem Fall zusammen mit seinem Motorgehäuse 13. Das Motorgehäuse weist hier einen rechteckigen Querschnitt auf. Alternativ dazu kann es aber auch einen runden, insbesondere kreisförmigen Querschnitt, aufweisen oder zumindest kann der Querschnitt abgerundete Ecken aufweisen oder als Vieleck mit mehr als vier Ecken ausgeformt sein, damit der Elektromotor 3 weniger Platz im Inneren der Drohne beansprucht. Entsprechende Gehäuse können auch für die Elektromotoren der übrigen Ausführungsbeispiele zum Einsatz kommen und sind dort nur der Übersicht halber nicht gezeigt.

Die beispielhafte Feldlinie des durch Zusammenwirken von Rotor und Stator gebildeten Magnetfeldes B dringt hier in einen Bereich außerhalb des Motorgehäuses 13 vor. Die Komponenten des Elektromotors 3 sind insgesamt so ausgelegt, dass das externe Magnetfeld Bₑₓₜ außerhalb des Motorgehäuses einen magnetischen Fluss von mindestens einem der vorab genannten Schwellwerte aufweist.

Im Beispiel der Figur 3 weist der Rotor 9 keine Permanentmagnete auf, sondern er ist mit vier Erregerspulen 15b ausgestattet, die zur Erzeugung des Erregermagnetfeldes dienen. Auch hier ist der Rotor 9, genau wie beim ersten Ausführungsbeispiel, als vierpoliger Rotor ausgebildet, es handelt sich also um zwei Polpaare. Aufbau und Wirkung der Statorwicklungen 17 ist hier analog zu dem beschriebenen ersten Ausführungsbeispiel. Insbesondere können auch hier die Statorwicklungen entweder aus normalleitenden Leitern oder aber auch aus supraleitenden Leitern 21 gebildet sein, wie für eine der Statorwicklungen beispielhaft angedeutet.

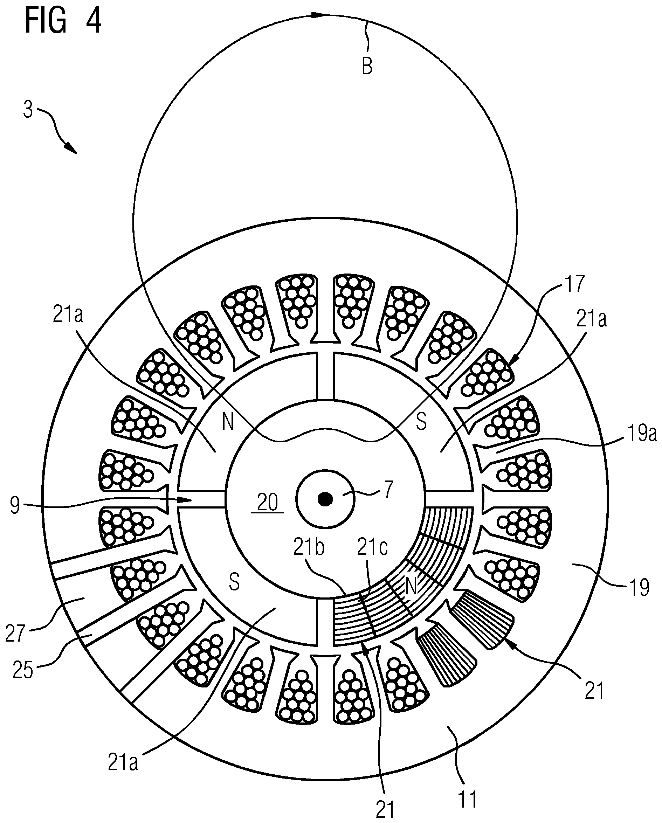

Figur 4 zeigt ein weiteres Ausführungsbeispiel eines Elektromotors 3 nach der vorliegenden Erfindung. Bei diesem Beispiel weist der Rotor 9 mehrere supraleitende Blöcke 21a oder 21b auf, in denen ein magnetischer Fluss derart eingeprägt werden kann, dass der Block 21a oder 21b wie ein Permanentmagnet wirkt. Diese Blöcke können unterschiedlich ausgestaltet sein. Beispielsweise können die Blöcke 21a als supraleitende Massivkörper ausgestaltet sein, wie in Figur 4 beispielhaft für drei der Blöcke gezeigt. In einer solchen Ausführungsform wären allerdings vorteilhaft alle vorliegenden Blöcke als derartige supraleitende Massivkörper ausgebildet. Nur beispielhaft ist in Figur 4 einer der Blöcke als zusammengesetzter supraleitender Block 21b dargestellt, der durch mehrere Stapel von jeweils mehreren übereinanderliegenden supraleitenden Bandleitern 21c gebildet ist. Bei einer solchen Ausführungsform wären dann entsprechend auch alle supraleitenden Blöcke des Rotors vorteilhafterweise ähnlich zueinander aufgebaut.

Unabhängig von der genauen Ausführungsform der supraleitenden Blöcke sind diese in jedem Fall dazu geeignet, dass ein vordefinierter magnetischer Fluss in ihnen eingeprägt werden kann, beispielsweise eingefroren werden kann, so dass durch den Rotor 9 ein Magnetfeld erzeugt werden kann, ohne dafür im Betrieb eine eigene Stromquelle zu benötigen. Auch hier ist beispielhaft eine vierpolige Maschine gezeigt, bei denen die Blöcke 21a oder 21b jeweils an ihrer radial außenliegenden Oberfläche abwechselnd magnetische Nord- und Südpole ausbilden. Für jede der gezeigten Konfigurationen gilt aber, dass grundsätzlich auch andere Polzahlen in Frage kommen, wobei aufgrund der gewünschten hohen radialen Reichweite des Magnetfeldes B Polpaarzahlen zwischen 1 und 5 allgemein besonders bevorzugt sind.

Allgemein muss der erste Träger 19 der Statorwicklungen 17 nicht durchgehend aus einem einheitlichen Material ausgebildet sein. Beispielhaft ist in Figur 4 im linken unteren Bereich des ersten Trägers 19 dargestellt, dass dieser aus abwechselnden azimutalen Segmenten aus unterschiedlichen Materialien zusammengesetzt sein kann. Im gezeigten Abschnitt sind dies radial durchgehende weichmagnetische Trägersegmente 25 zwischen den Nuten, in die die Statorwicklungen 17 eingettet sind und radial außerhalb dieser Nuten angeordnete amagnetische Trägersegmente 27. Es sind jedoch auch andere Konfigurationen möglich. Wesentlich ist, dass der erste Träger 19 allgemein nicht ringförmig durchgehend aus weichmagnetischem Material gebildet ist. Die beschriebene Segmentierung des ersten Trägers 19 ist allgemein auch für die in Figur 2 oder 3 gezeigten sonstigen Ausgestaltungen des Elektromotors anwendbar.

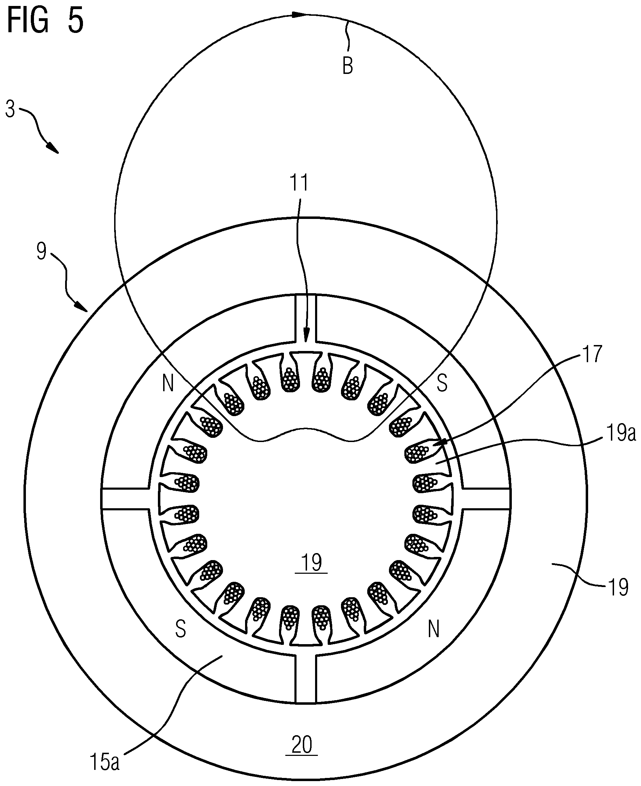

Als alternative Ausgestaltung des Elektromotors 3 zeigt Figur 5 beispielhaft einen Außenrotormotor, bei dem also der drehbar gelagerte Rotor 9 den feststehenden Stator 11 radial umgibt. Entsprechend umgibt auch der zweite Träger 20, der Teil des Rotors 9 ist, den ersten Träger 19, der Teil des Stators 11 ist, radial. Auch hier sind die Statorwicklungen 17 in Nuten zwischen Zähnen 19a des Trägers 19 des Stators 11 angeordnet, allerdings im Gegensatz zu den Innenläufermotoren auf der radial außenliegenden Seite dieses Trägers 19. Der Träger 20 des Rotors trägt die magnetischen oder elektromagnetischen Elemente, die zusammen mit der Statorwicklung das übergeordnete Magnetfeld erzeugen, für das wiederum beispielhaft eine Feldlinie B eingezeichnet ist. Im gezeigten Beispiel handelt es sich bei diesen Elementen um Permanentmagnete 15a. Prinzipiell können aber auch beim Außenläufermotor normalleitende und/oder supraleitende Erregerspulen 15b sowie massive oder zusammengesetzte supraleitende Blöcke 21a oder 21b zum Einsatz kommen, analog zu den Beispielen der Figuren 3 und 4 für den Innenläufermotor. Auch die Statorwicklungen 17 können analog zu den verschiedenen Varianten des Innenläufermotors auch hier als normalleitende oder auch als supraleitende Wicklungen ausgestaltet sein.

Für alle verschiedenen Ausführungen des Außenläufermotors ist es besonders vorteilhaft, wenn der zweite Träger 20 des Rotors 9, welcher hier der außenliegende der beiden Träger ist, so ausgestaltet ist, dass ein hoher Anteil des magnetischen Flusses nach außen geführt wird, so dass auch außerhalb eines hier nicht gezeigten Motorgehäuses ein externes Magnetfeld mit entsprechend hohem magnetischen Fluss Bₑₓₜ erzeugt wird, analog zu den beschriebenen vorteilhaften Ausführungsformen des Innenläufermotors. Im Gegensatz zu herkömmlichen Außenläufermotoren ist also der zweite Träger 20 nicht als weichmagnetisches Joch ausgebildet, welches den magnetischen Fluss innerhalb des Trägers führt.

## Patentansprüche

1. Drohne (1) zur Auslösung von Seeminen mittels eines externen Magnetfeldes (Bext), **dadurch gekennzeichnet dass** die Drohne (1) einen Antrieb mit einem Elektromotor (3) zur Fortbewegung im Wasser aufweist,
- wobei der Elektromotor zur Erfüllung einer Doppelfunktion ausgelegt ist, bei der er nicht nur für den Antrieb, sondern auch für die Minenauslösung genutzt wird,
- wobei der Elektromotor (3) einen Stator (11) und einen auf einer Rotorwelle (7) drehbar gelagerten Rotor (9) umfasst,
- wobei der Stator (11) wenigstens eine Statorwicklung (17) aufweist, welche auf einem ersten Träger (19) angeordnet ist,
- wobei der Rotor (9) einen zweiten Träger (20) und darauf wenigstens ein magnetisches oder elektromagnetisches Element (15a, 15b, 15c) aufweist, welches elektromagnetisch derart mit der wenigstens einen Statorwicklung (17) zusammenwirken kann, dass im Betrieb des Elektromotors (3) ein übergeordnetes Magnetfeld (B) ausgebildet wird
- wobei hierzu die magnetischen Eigenschaften des ersten Trägers (19) und/oder des zweiten Trägers (20) so ausgebildet sind, und der Elektromotor (3) so ausgestaltet ist, dass bei seinem Betrieb das außerhalb des Elektromotors (3) ausgebildete externe Magnetfeld (Bₑₓₜ) dort zumindest in einem Teilbereich eine magnetische Flussdichte von wenigstens 0.5 mT aufweist

2. Drohne (1) nach Anspruch 1, bei welcher der Elektromotor (3) so ausgebildet ist, dass der Rotor (9) radial innerhalb des Stators (11) angeordnet ist.

3. Drohne (1) nach Anspruch 1, bei welcher der Elektromotor (3) so ausgebildet ist, dass der Stator (11) radial innerhalb des Rotors (9) angeordnet ist.

4. Drohne (1) nach einem der vorhergehenden Ansprüche, bei welcher der erste Träger (19) und/oder der zweite Träger (20) wenigstens abschnittsweise aus einem Material ausgebildet ist, welches eine effektive relative Permeabilitätszahl µᵣ von höchstens 300, insbesondere höchstens 10, aufweist.

5. Drohne (1) nach einem der vorhergehenden Ansprüche, bei welcher der Elektromotor (3) ein amagnetisches Motorgehäuse (13) aufweist.

6. Drohne (1) nach einem der vorstehenden Ansprüche, bei welcher der Elektromotor (3) als Synchronmotor ausgebildet ist, wobei der Rotor (9) wenigstens ein Element (15a, 15b) zur Erzeugung eines Magnetfeldes, insbesondere wenigstens einen Permanentmagneten (15a) und/oder wenigstens eine elektrische Erregerspule aufweist (15b).

7. Drohne (1) nach einem der Ansprüche 1 bis 5, bei welcher der Elektromotor (3) als Asynchronmotor ausgebildet ist, wobei der Rotor (9) als elektromagnetisches Element wenigstens ein Element zur Ausbildung eines geschlossenen Strompfads, insbesondere einen Kurzschlusskäfig oder wenigstens eine ringförmig kurzgeschlossene oder kurzschließbare Rotorspule aufweist.

8. Drohne (1) nach einem der vorhergehenden Ansprüche, bei welcher der erste Träger (19) und/oder der zweite Träger (20) wenigstens abschnittsweise aus einem Material ausgebildet ist, welches einen amagnetischen Stahl und/oder Kunststoff umfasst.

9. Drohne (1) nach einem der vorhergehenden Ansprüche, bei welcher der Elektromotor (3) wenigstens ein supraleitendes Element(21) umfasst.

10. Drohne (1) nach Anspruch 9, bei welcher der Rotor (9) wenigstens einen Block (21a) aus supraleitendem Material umfasst, in welchem ein magnetischer Fluss derart aufgeprägt werden kann, dass der wenigstens eine Block (21a) wie ein Permanentmagnet wirkt.

11. Drohne (1) nach Anspruch 9, bei welcher der Rotor (9) wenigstens einen Block (21b) umfasst, wobei jeder Block jeweils eine Mehrzahl gestapelter supraleitender Bandleiter (21c) umfasst, und wobei in dem jeweiligen Block (21b) ein magnetischer Fluss derart eingeprägt werden kann, dass der Block (21b) wie ein Permanentmagnet wirkt.

12. Drohne (1) nach Anspruch 9, bei welcher der Rotor (9) wenigstens eine supraleitende Erregerspule (23) aufweist.

13. Drohne (1) nach einem der Ansprüche 9 bis 12, bei welcher die wenigstens eine Statorwicklung (17) einen supraleitenden elektrischen Leiter (21) aufweist.

14. Drohne (1) nach einem der Ansprüche 9 bis 13, bei welcher der supraleitende elektrische Leiter (21) ein hochtemperatursupraleitendes Material, insbesondere Magnesiumdiborid und/oder ein Material des Typs REBa₂Cu₃Oₓ, umfasst.

## Claims

1. Drone (1) for triggering sea mines by means of an external magnetic field (Bₑₓₜ),
**characterised in that**
the drone (1) has a drive with an electric motor (3) for locomotion in water,
- wherein the electric motor (3) is designed to fulfil a dual function, in which it is not only used for the drive, but instead also for triggering the mines,
- wherein the electric motor (3) has a stator (11) and a rotor (9) that is rotatably mounted on a rotor shaft (7),
- wherein the stator (11) has at least one stator winding (17) which is arranged on a first carrier (19),
- wherein the rotor (9) has a second carrier (20) and, arranged thereon, at least one magnetic or electromagnetic element (15a, 15b, 15c) which is able to interact electromagnetically with the at least one stator winding (17) in such a way that a superordinate magnetic field (B) is formed during operation of the electric motor (3)
- wherein to this end the magnetic properties of the first carrier (19) and/or of the second carrier (20) are embodied in such a way and the electric motor (3) is configured in such a way that, during its operation, the external magnetic field (Bₑₓₜ) formed outside of the electric motor (3) has a magnetic flux density of at least 0.5 mT at said location at least in a subarea thereof.

2. Drone (1) according to claim 1, in which the electric motor (3) is embodied in such a way that the rotor (9) is arranged radially inside the stator (11).

3. Drone (1) according to claim 1, in which the electric motor (3) is embodied in such a way that the stator (11) is arranged radially inside the rotor (9).

4. Drone (1) according to one of the preceding claims, in which the first carrier (19) and/or the second carrier (20) is embodied at least in sections from a material which has an effective relative permeability number µᵣ of at most 300, in particular at most 10.

5. Drone (1) according to one of the preceding claims, in which the electric motor (3) has a nonmagnetic motor housing (13) .

6. Drone (1) according to one of the preceding claims, in which the electric motor (3) is embodied as a synchronous motor, wherein the rotor (9) has at least one element (15a, 15b) for generating a magnetic field, in particular at least one permanent magnet (15a) and/or at least one electrical field coil (15b).

7. Drone (1) according to one of claims 1 to 5, in which the electric motor (3) is embodied as an asynchronous motor, wherein the rotor (9) has, as the electromagnetic element, at least one element for forming a closed current path, in particular a squirrel cage or at least one annularly shortcircuited or short-circuitable rotor coil.

8. Drone (1) according to one of the preceding claims, in which the first carrier (19) and/or the second carrier (20) is embodied at least in sections from a material which comprises a nonmagnetic steel and/or plastic.

9. Drone (1) according to one of the preceding claims, in which the electric motor (3) comprises at least one superconducting element (21).

10. Drone (1) according to claim 9, in which the rotor (9) comprises at least one block (21a) made of superconducting material in which a magnetic flux may be impressed in such a way that the at least one block (21a) acts like a permanent magnet.

11. Drone (1) according to claim 9, in which the rotor (9) comprises at least one block (21b), wherein each block in each case comprises a plurality of stacked superconducting tape conductors (21c), and wherein a magnetic flux may be impressed in the respective block (21b) in such a way that the block (21b) acts like a permanent magnet.

12. Drone (1) according to claim 9, in which the rotor (9) has at least one superconducting field coil (23).

13. Drone (1) according to one of claims 9 to 12, in which the at least one stator winding (17) has a superconducting electrical conductor (21).

14. Drone (1) according to one of claims 9 to 13, in which the superconducting electrical conductor (21) comprises a high-temperature superconducting material, in particular magnesium diboride and/or a material of the type REBa₂Cu₃Oₓ.

## Revendications

1. Drone (1) pour le déclenchement de mines sous-marines au moyen d'un champ (Bₑₓₜ) magnétique extérieur,
**caractérisé en ce que**
le drone (1) a une propulsion ayant un moteur (3) électrique pour avancer dans l'eau,
- dans lequel le moteur électrique est conçu pour remplir une fonction double, dans laquelle il est utilisé non seulement pour la propulsion, mais également pour le déclenchement de mines,
- dans lequel le moteur (3) électrique comprend un stator (11) et un rotor (9) monté tournant sur un arbre (7) rotorique,
- dans lequel le stator (11) a au moins un enroulement (17) statorique, qui est monté sur un premier support (19),
- dans lequel le rotor (9) a un deuxième support (20) et dessus au moins un élément (15a, 15b, 15c) magnétique ou électromagnétique, lequel coopère électromagnétiquement avec le au moins un enroulement (17) statorique, de manière à constituer, lorsque le moteur (3) électrique est en fonctionnement, un champ (B) magnétique supérieur hiérarchiquement
- dans lequel à cet effet, les propriétés magnétiques du premier support (19) et/ou du deuxième support (20) sont constituées et le moteur (3) électrique est conformé de manière à ce que, lors de son fonctionnement, le champ (Bₑₓₜ) magnétique extérieur, constitué à l'extérieur du moteur (3) électrique, y ait, au moins dans une région partielle, une densité de flux magnétique d'au moins 0,5 mT.

2. Drone (1) suivant la revendication 1, dans lequel le moteur (3) électrique est constitué de manière à ce que le rotor (9) soit disposé à l'intérieur radialement du stator (11).

3. Drone (1) suivant la revendication 1, dans lequel le moteur (3) électrique est constitué de manière à ce que le stator (11) soit disposé à l'intérieur radialement du rotor (9).

4. Drone (1) suivant l'une des revendications précédentes, dans lequel le premier support (19) et/ou le deuxième support (20) sont, au moins par endroit, en un matériau, qui a une perméabilité µᵣ relative efficace de 300 au plus, notamment de 10 au plus.

5. Drone (1) suivant l'une des revendications précédentes, dans lequel le moteur (3) électrique a un carter (13) amagnétique.

6. Drone (1) suivant l'une des revendications précédentes, dans lequel le moteur (3) électrique est constitué en moteur synchrone, le rotor (9) ayant au moins un élément (15a, 15b) de production d'un champ magnétique, notamment au moins un aimant (15a) permanent et/ou au moins une bobine (15b) d'excitation électrique.

7. Drone (1) suivant l'une des revendications 1 à 5, dans lequel le moteur (3) électrique est constitué en moteur asynchrone, le rotor (9) ayant, comme élément électromagnétique, au moins un élément pour constituer un trajet de courant fermé, notamment une cage de court-circuit ou au moins une bobine de rotor court-circuitée ou pouvant l'être en forme d'anneau.

8. Drone (1) suivant l'une des revendications précédentes, dans lequel le premier support (19) et/ou le deuxième support (20) est, au moins par endroit, en un matériau, qui comprend un acier amagnétique et/ou une matière plastique.

9. Drone (1) suivant l'une des revendications précédentes, dans lequel le moteur (3) électrique comprend au moins un élément (21) supraconducteur.

10. Drone (1) suivant la revendication 9, dans lequel le rotor (9) comprend au moins un bloc (21a) en matériau supraconducteur, auquel peut être appliqué un flux magnétique, de manière à ce que le au moins un bloc (21a) agisse comme un aimant permanent.

11. Drone (1) suivant la revendication 9, dans lequel le rotor (9) comprend au moins un bloc (21b), chaque bloc comprenant, respectivement, une pluralité de conducteurs (21c) en bande supraconducteurs empilés et dans lequel un flux magnétique peut être appliqué à chaque bloc (21b) de manière à ce que le bloc (21b) agisse comme un aimant permanent.

12. Drone (1) suivant la revendication 9, dans lequel le rotor (9) a au moins une bobine (23) d'excitation supraconductrice.

13. Drone (1) suivant l'une des revendications 9 à 12, dans lequel le au moins un enroulement (17) statorique a un conducteur (21) électrique supraconducteur.

14. Drone (1) suivant l'une des revendications 9 à 13, dans lequel le conducteur (21) électrique supraconducteur comprend un matériau supraconducteur à haute température, notamment du diborure de magnésium et/ou un matériau du type REBa₂Cu₃Oₓ.
